# EUROPÄISCHE PATENTSCHRIFT

(11) **EP 3 290 222 B1**
(45) Veröffentlichungstag und Bekanntmachung des Hinweises auf die Patenterteilung: **15.05.2019**
(21) Anmeldenummer: 17188066.9
(22) Anmeldetag: 28.08.2017
(51) Int. Cl.: B42C 1/12

(54) **VERFAHREN UND VORRICHTUNG ZUR HERSTELLUNG PERSONALISIERTER DRUCKPRODUKTE**
METHOD AND DEVICE FOR PRODUCING PERSONALISED PRINTED PRODUCTS
PROCÉDÉ ET DISPOSITIF DE FABRICATION DE PRODUITS IMPRIMÉS PERSONNALISÉS

(30) Priorität: 01.09.2016 CH 11342016
(43) Veröffentlichungstag der Anmeldung: 07.03.2018
(73) Patentinhaber: Müller Martini Holding AG, 6052 Hergiswil (CH)
(72) Erfinder: Meyerhans, Rolf, 6260 Reiden (CH); Kost, Roland, 4665 Oftringen (CH); Leuenberger, Hans, 4814 Bottenwil (CH)

(56) Entgegenhaltungen:
- DE-A1- 19 512 501

## Beschreibung

Die Erfindung betrifft ein Verfahren zur Herstellung personalisierter Druckprodukte, bei dem jeweils zumindest ein individuell bedruckter Druckbogen mit einer Anzahl konventionell bedruckten Druckbogen zusammengetragen wird und die zusammengetragenen Druckbogen zu einem gemeinsamen Druckprodukt verbunden werden. Dabei werden Informationen zur Herstellung der Druckprodukte aus einer Datenbank an eine Steuereinrichtung weitergegeben. Zudem betrifft die Erfindung eine entsprechende Vorrichtung mit einer Datenbank, in welcher Informationen zur Herstellung der Druckprodukte gespeichert sind, mit einer Zusammentrageinrichtung für die Druckbogen, mit einer Zuführeinrichtung zum Transport des zumindest einen individuell bedruckten Druckbogens zur Zusammentrageinrichtung, mit mehreren Vereinzelungs- und Zuführeinrichtungen zum Vereinzeln von Stapeln konventionell bedruckter Druckbogen und zum Zuführen von mehreren vereinzelten, konventionell bedruckten Druckbogen zur Zusammentrageinrichtung, mit einer Bindeeinrichtung für die aus den zusammengetragenen Druckbogen gebildeten Druckprodukte sowie mit einer Steuereinrichtung. Eine solche Bindeeinrichtung kann beispielsweise als Heft- oder als Klebeeinrichtung ausgebildet sein.

Die DE19512501 A1 offenbart ein solches Verfahren und eine entsprechende Vorrichtung mit einer Druckmaschine zum Bedrucken von Druckbogen sowie mit einem Sammelhefter zum Sammeln und Binden der Druckbogen zu einem Druckprodukt. Dazu weist die Vorrichtung eine mit einer Steuereinrichtung verbundene Datenbank auf. Basierend auf den Informationen aus der Datenbank ist die Druckmaschine mit Hilfe einer zusätzlichen Druckeinrichtung in der Lage, auf Druckbogen mit einem in sich unveränderbaren Druckbild zusätzlich personalisierte Daten sowie ein Erkennungsmerkmal, insbesondere einen Barcode aufzubringen, so dass zumindest teilweise individuell bedruckte Druckbogen entstehen.

Zudem werden konventionelle Druckbogen, welche lediglich ein in sich unveränderbares Druckbild aufweisen, auf bekannte Weise jeweils in verschiedenen Anlegern der Vorrichtung in Stapelform abgelegt. Dagegen werden die zumindest teilweise individuell bedruckten Druckbogen, welche ausser einem in sich unveränderbaren Druckbild auch personalisierte Daten sowie ein Erkennungsmerkmal aufweisen, in mehreren Stapeln eines Zwischenlagers abgelegt. In diesem Bereich ist ein Lese- und Aufzeichnungsgerät zum Auslesen und Abspeichern des Erkennungsmerkmals und damit der Reihenfolge der im Zwischenlager abgelegten Druckbogen angeordnet. Das Erkennungsmerkmal der vom Zwischenlager zum Sammelhefter transportierten Druckbogen wird nochmals mittels eines weiteren, im Bereich des Transportwegs angeordneten Lese- und Auswertegeräts ausgelesen. Damit kann die Reihenfolge der dem Sammelhefter zugeführten Druckbogen mit der entsprechenden, im Lese- und Aufzeichnungsgerät abgespeicherten Reihenfolge der im Zwischenlager abgelegten Druckbogen verglichen werden. Im Ergebnis dieser Auswertung ist sichergestellt, dass die in den Anlegern befindlichen konventionellen Druckbogen lediglich mit den jeweils zu einem gleichen personalisierten Druckprodukt gehörenden, zumindest teilweise individuell bedruckten Druckbogen zusammengetragen und miteinander verbunden werden. Zum selektiven Zusammentragen der konventionellen Druckbogen werden über die Steuereinrichtung entsprechende Informationen aus der Datenbank verwendet. Durch eine Kombination von bereits in einer Druckmaschine zumindest teilweise individuell bedruckten Druckbogen mit anderen, nicht individuell bedruckten oder im Sammelhefter weiter individuell bedruckten Druckbogen können mit diesem Verfahren sowie der entsprechenden Vorrichtung personalisierte Druckprodukte in grosser Auflage hergestellt und basierend auf den in der Datenbank verfügbaren Informationen mit den entsprechenden Zustelladressen versehen werden. Die einzelnen Druckbogen jedes dieser personalisierten Druckprodukte werden in der Hefteinrichtung des Sammelhefters mit Drahtklammern miteinander verbunden. Daraufhin werden die Druckprodukte in einer Schneidstation dreiseitig beschnitten und schliesslich mittels einer nachgeschalteten Stapelbildungsstation bzw. eines Kreuzlegers paketweise zum Versand bereitgestellt.

Allerdings muss zu der auf diese Weise erfolgenden Herstellung personalisierter Druckprodukte eine ständige Daten-Verbindung zwischen der Steuereinrichtung und der Datenbank gewährleistet sein. Derartige Daten-Verbindungen erfordern ein firmeninternes oder gar ein firmenübergreifendes Netzwerk, welches bei vielen Anbietern entsprechender Dienstleistungen oder in vielen Teilen der Welt nicht oder nicht in geeigneter Art und Weise vorhanden ist. Zudem sind solche Netzwerke auch störungsanfällig, so dass eine ausreichende Betriebssicherheit nicht ständig gewährleistet werden kann. Schliesslich ist zur Sicherstellung des Zusammentragens der zum gleichen Druckprodukt gehörenden Druckbogen ein relativ aufwändiges Verfahren und eine entsprechende Vorrichtung mit zusätzlichen Einrichtungen zum Aufdrucken des Erkennungsmerkmals sowie mit entsprechenden Lesegeräten in der Druckmaschine und im Sammelhefter erforderlich.

Mit der DE102015213328 A1 ist ein Verfahren zum Herstellen kleinerer Stückzahlen aufeinanderfolgender, unterschiedlicher Druckprodukte bekannt geworden. Bei diesem Verfahren wird zunächst eine aufgerollte und bis dahin unbedruckte Bedruckstoffbahn abgerollt und mittels einer Digitaldruckeinheit individuell bedruckt, wobei pro Bogenteil der Bedruckstoffbahn zudem ein Erkennungsmerkmal aufgebracht wird. Unmittelbar anschliessend oder nach Zwischenlagerung und erneutem Abrollen der bedruckten und mit dem Erkennungsmerkmal versehenen Bedruckstoffbahn wird das Erkennungsmerkmal in einem Lesegerät ausgelesen und dient sowohl der Ansteuerung eines Querschneiders zum Abtrennen der individuell gedruckten Bogenteile von der Bedruckstoffbahn als auch nachgeordneter Vorrichtungen, wie z.B. einer zur Weiterverarbeitung dieser Bogenteile angeordneten Heft- und Falzeinheit.

Mit einem solchen Verfahren und einer solchen Vorrichtung können jedoch lediglich Druckbogen aus einer Bedruckstoffbahn zu personalisierten Druckprodukten verarbeitet werden. Eine Kombination mit weiteren, nicht aus dieser Bedruckstoffbahn stammenden und auf anderem Weg zugeführten Druckbogen ist nicht vorgesehen.

Aufgabe der Erfindung war es daher ein von Netzwerken unabhängiges Verfahren mit verbesserter Betriebssicherheit und eine entsprechende Vorrichtung zum Herstellen fehlerfreier, personalisierter Druckprodukte, bestehend aus zumindest einem individuell bedruckten Druckbogen sowie einer Anzahl konventionell bedruckter Druckbogen zu schaffen. Zudem sollen das Verfahren und die Vorrichtung einfach sowie kostengünstig sein.

Diese Aufgabe wird durch ein Verfahren gemäss des kennzeichnenden Teils des Anspruchs 1 und durch eine Vorrichtung gemäss des kennzeichnendem Teils des Anspruchs 13 gelöst. Vorteilhafte Ausführungsformen sind Gegenstände der jeweiligen Unteransprüche.

Beim erfindungsgemässen Verfahren werden zunächst mehrere Stapel konventionell bedruckter Druckbogen bereitgestellt. Zudem wird eine Bedruckstoffbahn mit mehreren individuellen Bogenteilen sowie pro individuellem Bogenteil mit jeweils einer auf den Informationen aus der Datenbank beruhenden Markierung zur Steuerung der Herstellung der personalisierten Druckprodukte bedruckt oder eine Rolle einer derart bedruckten Bedruckstoffbahn bereitgestellt. Die Markierungen der individuellen Bogenteile werden ausgelesen und die daraus gewonnenen Informationen zum selektiven Zusammentragen jeweils zu einem gemeinsamen Druckprodukt gehörender, in den Stapeln bereitgestellter, konventionell bedruckter Druckbogen verwendet. Nach dem Auslesen der Markierungen der individuellen Bogenteile werden von der Bedruckstoffbahn individuell bedruckte Druckbogen abgetrennt, welche jeweils ein individuelles Bogenteil aufweisen. Schliesslich wird den zugehörigen, selektiv zusammenzutragenden, konventionell bedruckten Druckbogen jeweils zumindest ein individuell bedruckter Druckbogen entsprechend der aus seiner Markierung ausgelesenen Informationen zugeführt.

Die erfindungsgemässe Vorrichtung weist dazu eine Rollendruckmaschine zum Bedrucken einer Bedruckstoffbahn mit individuellen Bogenteilen und mit einer auf den Informationen aus der Datenbank beruhenden Markierung zur Steuerung der Herstellung der personalisierten Druckprodukte oder eine Abrolleinrichtung für eine solche Bedruckstoffbahn auf. Zudem umfasst die Vorrichtung ein Lesegerät für die Markierungen sowie eine Schneideinrichtung zum Abtrennen individuell bedruckter Druckbogen von der mit individuellen Bogenteilen bedruckten Bedruckstoffbahn, wobei die Schneideinrichtung geeignet ist, die individuell bedruckten Druckbogen erst nach dem Auslesen der Markierungen der individuellen Bogenteile von der Bedruckstoffbahn abzutrennen. Dabei sind zumindest das Lesegerät, die Zuführeinrichtung für den zumindest einen individuell bedruckten Druckbogen und die Vereinzelungs- und Zuführeinrichtungen für die konventionell bedruckten Druckbogen mit der Steuereinrichtung verbunden.

Die Steuerung der selektiven Zuführung der konventionellen Druckbogen erfolgt somit entsprechende der Abfolge der auf der Bedruckstoffbahn aufgebrachten Markierungen. Mit diesem Verfahren und der entsprechenden Vorrichtung kann daher auf eine ständige Verbindung zwischen der Steuereinrichtung und der Datenbank verzichtet werden, so dass vorteilhaft kein entsprechendes Netzwerk benötigt wird. Es ergibt sich demnach eine sehr einfache Verfahrenssteuerung, welche auch für Firmen oder Länder mit gering ausgebauter Infrastruktur geeignet ist. Als Markierung kann dabei jedwede druckbare und maschinenlesbare Kennzeichnung, wie beispielsweise Barcodes Verwendung finden. Natürlich können mit der Markierung auch weitere Einrichtungen der Vorrichtung gesteuert werden. Erfolgt beispielsweise auch die Ansteuerung der Schneideinrichtung über die jeweilige Markierung, kann auf das Anbringen entsprechender Schneidmarken verzichtet werden.

Zudem können mit diesem Verfahren und der entsprechenden Vorrichtung auf einfache Weise die Vorteile von in grossen Stückzahlen herstellbaren und zu Druckprodukten zusammentragbaren, konventionell bedruckten Druckbogen mit den Vorteilen der eine hohe Werbewirksamkeit aufweisenden, individuell bedruckten Druckbogen kombiniert werden.

Gemäss einer Ausführungsform des erfindungsgemässen Verfahrens erfolgt das Auslesen der Markierung unmittelbar nach dem Bedrucken oder dem Bereitstellen der Rolle der bedruckten Bedruckstoffbahn. Dazu ist das Lesegerät unmittelbar stromab der Rollendruckmaschine oder der Abrolleinrichtung angeordnet. Auf diese Weise kann eine frühzeitige Datenübermittlung zur weiteren Verarbeitung des zumindest einen individuell bedruckten Druckbogens und der mit diesem zu einem gemeinsamen Druckprodukt gehörenden konventionell bedruckten Druckbogen erfolgen. Trotz systembedingt unterschiedlicher Transportstrecken zur selektiven Zuführung konventionell bedruckter Druckbogen steht infolge dieser frühzeitigen Datenübermittlung jeweils ausreichend Zeit zur entsprechenden Ansteuerung der entsprechenden Vereinzelungs- und Zuführeinrichtungen zur Verfügung. Zudem kann eine relativ kurze Fertigungszeit bzw. eine relativ grosse Verfahrensleistung erzielt werden.

Gemäss einer weiteren Ausführungsform des erfindungsgemässen Verfahrens erfolgt das Zuführen des jeweils zumindest einen individuell bedruckten Druckbogens zu den selektiv zusammenzutragenden, konventionell bedruckten Druckbogen stromauf oder stromab zumindest eines der konventionell bedruckten Druckbogen. Dazu ist die Zuführeinrichtung für den zumindest einen individuell bedruckten Druckbogen stromauf oder stromab zumindest einer der Vereinzelungs- und Zuführeinrichtungen für konventionell bedruckte Druckbogen in die Zusammentrageinrichtung einmündend angeordnet. Auf diese Weise kann der zumindest eine individuell bedruckte Druckbogen den selektiv zusammengetragenen, konventionell bedruckten Druckbogen vorteilhaft an einer beliebigen Position zugeführt werden, so dass beliebige Kombinationen personalisierter Druckprodukte hergestellt werden können.

Gemäss einer nächsten Ausführungsform des erfindungsgemässen Verfahrens wird ein individuell bedruckter Druckbogen getaktet von einer ersten Position, in der seine Markierung ausgelesen wird, zu einer zweiten Position transportiert, in der dieser individuell bedruckte Druckbogen den selektiv zusammengetragenen, konventionell bedruckten Druckbogen zugeführt wird. Zudem erfolgt ebenfalls ein getakteter Transport der konventionell bedruckten Druckbogen, ausgehend von einer sich an einer ersten, stromaufwärtigen Vereinzelungs- und Zuführeinrichtung für konventionell bedruckten Druckbogen befindlichen dritten Position bis hin zur zweiten Position, in welcher der individuell bedruckte Druckbogen den selektiv zusammengetragenen, konventionell bedruckten Druckbogen zugeführt wird. Dabei ist eine erste Anzahl von Arbeitstakten beim Transport des individuell bedruckten Druckbogens grösser als eine zweite Anzahl von Arbeitstakten beim Transport der selektiv zusammengetragenen, konventionell bedruckten Druckbogen.

Dazu ist zwischen dem Lesegerät für die Markierungen der Bedruckstoffbahn und der Zuführeinrichtung für den zumindest einen individuell bedruckten Druckbogen eine getaktete erste Transportstrecke und zwischen einer ersten, stromaufwärtigen Vereinzelungs- und Zuführeinrichtung für konventionell bedruckte Druckbogen und der Zuführeinrichtung für den zumindest einen individuell bedruckten Druckbogen eine getaktete zweite Transportstrecke ausgebildet. Die Anzahl von ersten Arbeitstakten der ersten Transportstrecke ist dabei grösser als die Anzahl von zweiten Arbeitstakten der zweiten Transportstrecke.

Mit diesem Verfahren und der entsprechenden Vorrichtung wird bei jeder aktivierten Konfiguration der Vereinzelungs- und Zuführeinrichtung für konventionell bedruckte Druckbogen nach dem Auslesen der jeweiligen Markierung eines individuell bedruckten Druckbogens ausreichend Zeit zum selektiven Vereinzeln der zum gleichen Druckprodukt gehörenden, konventionell bedruckter Druckbogen zur Verfügung gestellt.

Zusätzlich kann zwischen dem Lesegerät und der Schneideinrichtung eine Verlängerungsstrecke beispielsweise in Form einer zusätzlichen Bahnführung eingebaut werden. Bei entsprechendem Bedarf können damit verfahrensbedingt unterschiedliche Maschinentakte zwischen der ersten und der zweiten Transportstrecke auf kostengünstige Weise kompensiert werden.

Gemäss einer weiteren Ausführungsform des erfindungsgemässen Verfahrens werden zunächst mehrere aufeinanderfolgende, individuell bedruckte Druckbogen aufeinander gesammelt und den selektiv zusammengetragenen, konventionell bedruckten Druckbogen gemeinsam zugeführt. Dazu ist stromauf der Zuführeinrichtung eine Sammeleinrichtung für mehrere individuell bedruckte Druckbogen angeordnet. Auf diese Weise können den selektiv zusammengetragenen, konventionell bedruckten Druckbogen nicht nur einzelne individuell bedruckte Druckbogen, wie beispielsweise ein Umschlag oder eine einzelne Beilage, sondern eine Vielzahl individuell bedruckter Druckbogen, wie beispielsweise Katalogbeilagen, gemeinsam zugeführt werden. Dadurch kann der auf eine bestimmte Person oder eine Personengruppe zugeschnittene Werbewert der hergestellten Druckprodukte deutlich erhöht werden.

Gemäss einer weiteren Ausführungsform des erfindungsgemässen Verfahrens werden die zu einem Druckprodukt gehörenden Druckbogen zum Zusammentragen geöffnet, in geöffnetem Zustand nach- und übereinander abgelegt, dabei gemeinsam transportiert und anschliessend gemeinsam geheftet. Die Zusammentrageinrichtung ist dazu als Teil eines Sammelhefters ausgebildet und weist eine Sammelkette mit einem sattelförmigen First zum darauf nach- und aufeinander erfolgenden Ablegen sowie zum Transport vorgängig geöffneter Druckbogen auf. Zudem ist die Bindeeinrichtung als stromab der Zusammentrageinrichtung angeordnete Hefteinrichtung des Sammelhefters ausgebildet. Mit dem Sammelhefter kann vorteilhaft eine zur Herstellung herkömmlicher Druckprodukte aus konventionell bedruckten Druckbogen seit langem bewährte und hohe Leistungen erzielende Technologie auch zur umfassenden Personalisierung von Druckprodukten eingesetzt werden.

Gemäss einer weiteren Ausführungsform des erfindungsgemässen Verfahrens wird die Bedruckstoffbahn vor dem Abtrennen individuell bedruckter Druckbogen in einer Längsrichtung gerillt. Alternativ dazu erfolgt das Rillieren der individuell bedruckten Druckbogen nach deren Abtrennen von der Bedruckstoffbahn. Stromauf oder stromab der Schneideinrichtung ist dazu eine Rilliereinrichtung für die Bedruckstoffbahn bzw. für die von dieser abgetrennten, individuell bedruckten Druckbogen angeordnet. Zudem werden die individuell bedruckten Druckbogen vor dem Ablegen auf die Sammelkette in einer Längsrichtung gefalzt, wozu die Zuführeinrichtung für den zumindest einen individuell bedruckten Druckbogen eine Falzeinrichtung aufweist. Dadurch können die individuell bedruckten Druckbogen ausgehend von der Bedruckstoffbahn vorteilhaft ohne Unterbrechung des Herstellungsverfahrens online gefalzt und anschliessend im Sammelhefter zu Druckprodukten weiterverarbeitet werden.

In einer alternativen Ausführungsform des erfindungsgemässen Verfahrens werden die zu einem Druckprodukt gehörenden Druckbogen zum Zusammentragen liegend nacheinander und übereinander abgelegt, dabei gemeinsam transportiert und anschliessend miteinander verklebt. Die Zusammentrageinrichtung weist dazu eine Fördereinrichtung zum darauf nacheinander und aufeinander erfolgenden Ablegen von Druckbogen und zum Transport der liegenden Druckbogen auf und die Bindeeinrichtung ist als stromab der Zusammentrageinrichtung angeordneter Klebebinder ausgebildet. Damit kann vorteilhaft auch das ebenfalls seit langem bekannte Klebebinde-Verfahren zur umfassenden Personalisierung von Druckprodukten genutzt werden.

In einer weiteren Ausführungsform des erfindungsgemässen Verfahrens werden die beim Auslesen der Markierungen der individuellen Bogenteile gewonnenen Informationen zusätzlich zum Adressieren und/oder Stapeln der personalisierten Druckprodukte verwendet. Dazu weist die erfindungsgemässe Vorrichtung eine Adressiereinrichtung zum Bedrucken der personalisierten Druckprodukte mit einer Zustelladresse und eine Stapelbildungsstation zur Vorbereitung der personalisierten Druckprodukte für den Versand auf. Zudem ist die Adressiereinrichtung und/oder die Stapelbildungsstation mit der Steuereinrichtung der Vorrichtung verbunden. Damit können vorteilhaft weitere, ebenfalls in den Markierungen enthaltene Informationen für den Versand der entsprechenden, personalisierten Druckprodukte verwendet werden. Auch dazu erübrigt sich eine ständige Verbindung zwischen der Steuereinrichtung und der Datenbank.

Gemäss einer weiteren Ausführungsform des erfindungsgemässen Verfahrens erfolgt zwischen der Datenbank und der Steuereinrichtung ein direkter Datenaustausch. Dazu ist bei der erfindungsgemässen Vorrichtung zwischen der Datenbank und der Steuereinrichtung eine Datenleitung angeordnet. Über eine solche optional und zusätzlich zur Steuerung der selektiven Zuführung der konventionellen Druckbogen mittels der auf der Bedruckstoffbahn aufgebrachten Markierungen vorgesehene, permanente Datenleitung und mittels des damit ermöglichten Datenaustauschs können bei Vorhandensein eines firmeninternen oder firmenübergreifenden Netzwerks vorteilhaft zwischenzeitliche Änderungen der Kundendaten kurzfristig eingebracht und der Verfahrensablauf kann entsprechend angepasst werden. Zudem können die Daten für ein Echtzeit-Reporting ausgelesen und einer Auswertungssoftware zur Verfügung gestellt werden.

Gemäss einer weiteren Ausführungsform des erfindungsgemässen Verfahrens erfolgt das Bedrucken der Bedruckstoffbahn im Digitaldruckverfahren. Dazu ist die Rollendruckmaschine als Digitaldruckmaschine ausgebildet. Dadurch können bei aufeinanderfolgenden unterschiedlichen Druckprodukten die erforderlichen Änderungen der auf die Bedruckstoffbahn aufzubringenden Druckbilder und Markierungen verhältnismässig einfach und kostengünstig realisiert und somit die Vorteile des Digitaldruckverfahrens effektiv genutzt werden.

Nachfolgend wird die Erfindung anhand eines Ausführungsbeispiels näher beschrieben. Dabei zeigen:
- Fig. 1: eine schematische Darstellung der Ansteuerung einer zur Herstellung personalisierter Druckprodukte geeigneten, erfindungsgemässen Vorrichtung,
- Fig. 2: eine perspektivische Darstellung der Maschinenkonfiguration eines ersten, eine Rollendruckmaschine aufweisenden Ausführungsbeispiels der erfindungsgemässen Vorrichtung,
- Fig. 3: eine auf Fig. 2 basierende, schematische Darstellung des Funktionsprinzips, jedoch mit einer Abrolleinrichtung für eine bereits bedruckte Rolle,
- Fig. 4: eine schematische Darstellung des Funktionsprinzips in einer Variante zur Fig. 3,
- Fig. 5: eine schematische Darstellung des Funktionsprinzips eines zweiten Ausführungsbeispiels der erfindungsgemässen Vorrichtung,
- Fig. 6: eine schematische Darstellung der Ansteuerung analog Fig. 1, jedoch mit einer zusätzlichen Datenleitung zwischen Datenbank und Steuereinrichtung.

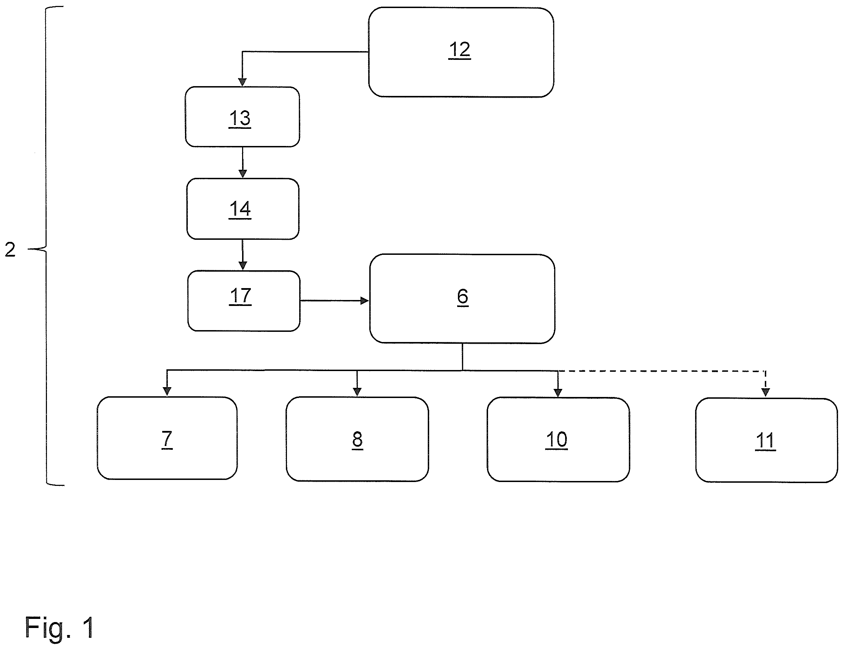

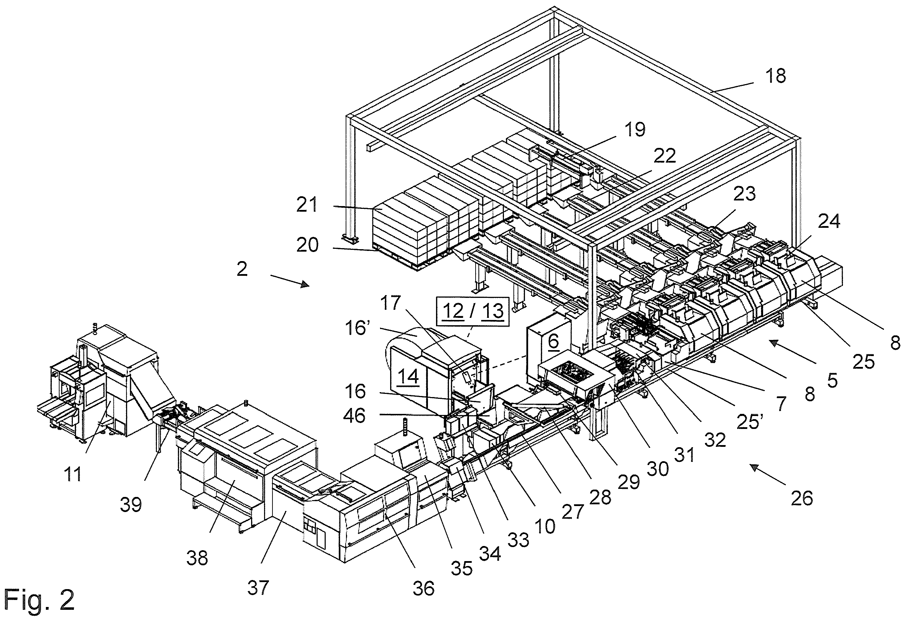

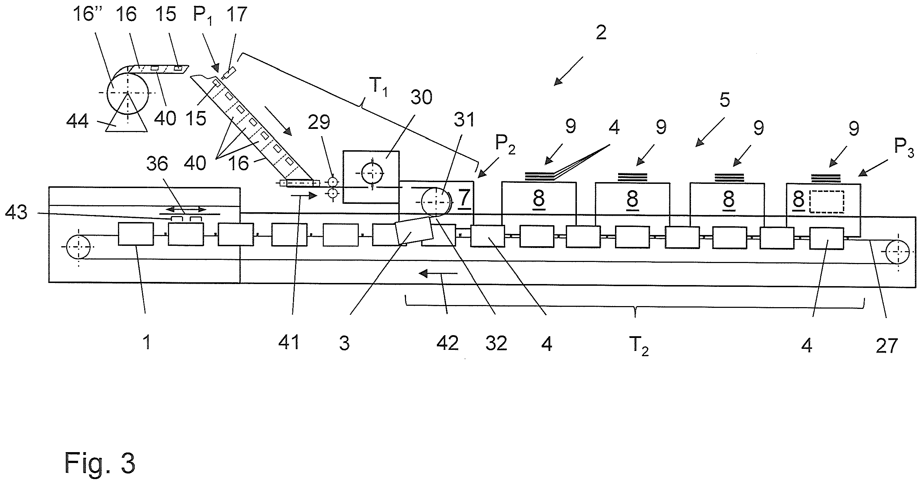

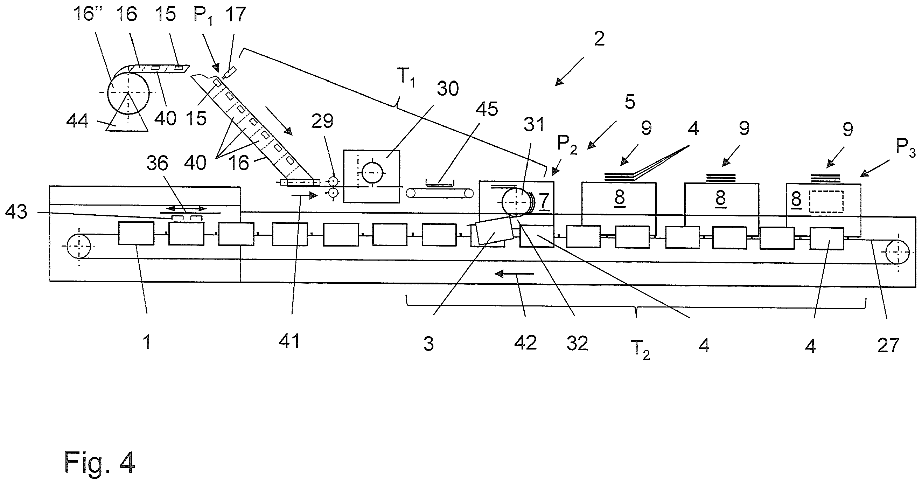

In Fig. 1 ist die Ansteuerung einer zur Herstellung personalisierter Druckprodukte 1, 1' (Fig. 3 bis Fig. 5) geeigneten erfindungsgemässen Vorrichtung 2 in einer schematischen Darstellung gezeigt. Die mit der Vorrichtung 2 herzustellenden, personalisierten Druckprodukte 1, 1' weisen jeweils zumindest einen individuell bedruckten Druckbogen 3 sowie eine Anzahl zugehöriger, konventionell bedruckter, d.h. jeweils mit einem unveränderbaren Druckbild versehener Druckbogen 4 auf. Diese Druckbogen 3, 4 werden beispielsweise in einer in Fig. 2 dargestellten, dort als Teil eines Sammelhefters 26 ausgebildeten Zusammentrageinrichtung 5 in der für ein jeweils herzustellendes, personalisiertes Druckprodukt 1 erforderlicher Reihenfolge aufeinander abgelegt und danach miteinander verbunden. Dazu besitzt die Vorrichtung 2 eine Steuereinrichtung 6, welche mit verschiedenen zur Herstellung der personalisierten Druckprodukte 1, 1' geeigneten Maschinenkomponenten verbunden ist. Als Maschinenkomponenten sind in Fig. 1 beispielhaft eine Zuführeinrichtung 7 für individuell bedruckte Druckbogen 3, mehrere beispielsweise als Falzanleger ausgebildete Vereinzelungs- und Zuführeinrichtungen 8 zum Vereinzeln von Stapeln 9 (Fig. 3, Fig. 4) konventionell bedruckter Druckbogen 4 und zur Zuführung dieser Druckbogen 4 zur Zusammentrageinrichtung 5, eine Adressiereinrichtung 10 sowie eine stromab der Vorrichtung 2 angeordnete und als Kreuzleger ausgebildete Stapelbildungsstation 11 dargestellt.

Zudem weist die Vorrichtung eine Datenbank 12 auf, welche zur Herstellung und zum Versand der personalisierten Druckprodukte 1, 1' erforderliche Kundendaten enthält. Mit der Datenbank 12 verbunden ist ein Computer 13 mit einem darauf ausgeführten Softwareprogramm, welches dem jeweiligen Fertigungsauftrag entsprechende Informationen aus der Datenbank 12 codiert. Basierend auf dieser Codierung kann eine mit dem Computer 13 verbundene Rollendruckmaschine 14 gemeinsam mit dem jeweiligen Druckbild oder separat dazu eine maschinenlesbare Markierung 15 (Fig. 3 bis Fig. 5), beispielsweise einen Barcode, auf eine der Rollendruckmaschine 14 zur Verfügung gestellte, quasi unendliche Bedruckstoffbahn 16 aufbringen. Dabei ist die Rollendruckmaschine 14 vorteilhaft eine Digitaldruckmaschine, welche sowohl die diversen Druckbilder als auch die Markierungen 15 auf die Bedruckstoffbahn 16 aufdruckt. Zum Aufdruck der Markierungen 15 kann aber auch eine zusätzliche Druckeinheit angeordnet sein. Natürlich kann auch eine herkömmliche Rollendruckmaschine mit einer zusätzlichen Druckeinheit für die Markierungen 15 Verwendung finden. Zum Auslesen der Markierungen 15 ist unmittelbar stromab der Rollendruckmaschine 14 ein Lesegerät 17 angeordnet.

Fig. 2 zeigt in einem ersten Ausführungsbeispiel eine online-Lösung, bei welcher die Rollendruckmaschine 14 für individuell bedruckte Druckbogen 3 mit den entsprechenden Maschinenkomponenten der Vorrichtung 2 verbunden ist. Die Vorrichtung 2 weist eine an einer Tragstruktur 18 angeordnete Hubeinrichtung 19 für auf Paletten 20 abgelegte, stangenförmige Stapel 21 konventionell bedruckt Druckbogen 4 auf. Die konventionell bedruckt Druckbogen 4 sind vorgängig auf nicht dargestellten Druckmaschinen hergestellt worden und in Stangenform mit auf einer ihrer Kanten stehendenden Druckbogen 4 zum aktuellen Standort transportiert worden. Dabei sind die Druckbogen 4 aller auf einer Palette 20 abgelegten Stapel 21 mit gleichen, unveränderbaren Druckbildern versehen. Demgegenüber unterscheiden sich die unveränderbaren Druckbilder von auf verschiedenen Paletten 20 gestapelt aufliegender Druckbogen 4 voneinander, d.h. die Druckbogen 4 auf einer Palette 20 weisen untereinander gleiche Druckbilder auf, welche sich aber von den ebenfalls untereinander gleichen Druckbildern der Druckbogen 4 einer anderen Palette 20 unterscheiden. Alternativ dazu können natürlich auch lose gestapelte Pakete von Druckbogen 4 per Hand zugeführt oder andere bekannte Zuführungen von Druckbogen 4 realisiert werden.

Stromab jeder Palette 20 ist eine Stangenzuführung 22 angeordnet, an welche sich ein Förderelement 23 zur Umorientierung der zuvor unmittelbar aneinander anliegenden, stehend zugeführten Druckbogen 4 in einen nicht dargestellten Schuppenstrom von Druckbogen 4 und zu dessen Zuführung zu einem Stapelmagazin 24 der jeweiligen Vereinzelungs- und Zuführeinrichtung 8 anschliesst. Dargestellt sind hier vier Vereinzelungs- und Zuführeinrichtungen 8 welche jeweils auf einem dafür vorgesehenen Anbauplatz 25 in der Vorrichtung 2 oberhalb einer Sammelkette 27 des Sammelhefters 26 positioniert sind. Natürlich kann der Sammelhefter 26 und damit die Vorrichtung 2 auch eine deutlich grössere Anzahl von beispielsweise mehr als zwanzig Anbauplätzen 25 und darauf montierten Vereinzelungs- und Zuführeinrichtungen 8 besitzen. Auf einem weiteren Anbauplatz 25' der Vorrichtung 2 ist die Zuführeinrichtung 7 für individuell bedruckte Druckbogen 3 platziert.

Obwohl in dem in Fig. 2 dargestellten Ausführungsbeispiel der weitere Anbauplatz 25' der Zuführeinrichtung 7 für den zumindest einen individuell bedruckten Druckbogen 3 stromab der Anbauplätze 25 für die Vereinzelungs- und Zuführeinrichtungen 8 für konventionell bedruckte Druckbogen 4 angeordnet ist, kann der weitere Anbauplatz 25' der Zuführeinrichtung 7 für den zumindest einen individuell bedruckten Druckbogen 3 prinzipiell stromauf oder stromab jedes einzelnen der Anbauplätze 25 für die Vereinzelungs- und Zuführeinrichtungen 8 und damit an beliebiger Stelle in die Zusammentrageinrichtung 5 einmündend angeordnet werden.

Stromab der Rollendruckmaschine 14 und des Lesegeräts 17 für die aufgebrachten Markierungen 15 ist eine Wendestange 28 zum Umlenken der Bedruckstoffbahn 16 in Richtung der Zuführeinrichtung 7 für individuell bedruckte Druckbogen 3 angeordnet. Weiter stromab der Wendestange 28 folgt zunächst eine Rilliereinrichtung 29 und danach eine Schneideinrichtung 30 für die Bedruckstoffbahn 16. Zwischen der Schneideinrichtung 30 und der Zuführeinrichtung 7 für individuell bedruckte Druckbogen 3 sind eine Umlenktrommel 31 und eine Falzeinrichtung 32 für die individuell bedruckten Druckbogen 3 angeordnet.

Weiter stromab entlang der Sammelkette 27 des Sammelhefters 26 weist die Vorrichtung 2 die beispielsweise als Tintenstrahldrucker ausgebildete Adressiereinrichtung 10, eine Kontroll- und Ausrichteinheit 33 für die zusammengetragenen Druckbogen 3, 4, eine Dickenkontrolleinrichtung 34, ein Bedienpult 35 für einen Maschinenführer sowie eine als Heftmaschine ausgebildete Bindeeinrichtung 36 auf.

Stromab des Sammelhefters 26 schliesst eine erste Transporteinrichtung 37 zu einem Dreischneider 38 und daran eine zweite Transporteinrichtung 39 zu der als Kreuzleger ausgebildeten Stapelbildungsstation 11 an.

Beim Betrieb der Vorrichtung 2 werden auf an sich bekannte Weise mehrere beispielsweise stangenförmige Stapel 21 konventionell bedruckter Druckbogen 4 auf Paletten 20 bereitgestellt und bei Bedarf mittels der Hubeinrichtung 19 zu der jeweiligen Stangenzuführung 22 transportiert. Von dort aus werden die entsprechenden Stapelmagazine 24 der Vereinzelungs- und Zuführeinrichtungen 8 mittels ihres Förderelements 23 mit konventionell bedruckten Druckbogen 4 beschickt. Diese konventionell bedruckten Druckbogen 4 werden in den Vereinzelungs- und Zuführeinrichtungen 8 in Form von Stapeln 9 vorgehalten (Fig. 3, Fig. 4). Natürlich können die Vereinzelungs- und Zuführeinrichtungen 8 auch mittels anderer Vorrichtungen oder von Bedienpersonen mit den konventionell bedruckten Druckbogen 4 versorgt werden.

Gleichzeitig oder auch zeitlich versetzt zur Zuführung der konventionell bedruckten Druckbogen 4 zu den Vereinzelungs- und Zuführeinrichtungen 8 wird die auf eine noch nicht bedruckte Rolle 16' aufgewickelte Bedruckstoffbahn 16 in der Rollendruckmaschine 14 mit mehreren individuellen Bogenteilen 40 (Fig. 3, Fig. 4), d.h. mit jeweils veränderbaren Druckbildern bedruckt. Zudem wird pro individuellem Bogenteil 40 jeweils eine auf Informationen aus der Datenbank 12 beruhende Markierung 15 zur Steuerung der Herstellung der personalisierten Druckprodukte 1 auf die Bedruckstoffbahn 16 aufgedruckt. Die Markierungen 15 der individuellen Bogenteile 40 werden mittels des Lesegeräts 17 frühzeitig, d.h. unmittelbar nach dem Bedrucken ausgelesen und die daraus gewonnenen Informationen zum selektiven Zusammentragen jeweils zu einem gemeinsamen Druckprodukt 1 gehörender, in den Stapeln 9 bereitgestellter, konventionell bedruckter Druckbogen 4 verwendet. Mit anderen Worten werden die Vereinzelungs- und Zuführeinrichtungen 8 nicht mehr wie im Stand der Technik direkt über Informationen aus der Datenbank 12 sondern vielmehr mittels aus der jeweiligen Markierung 15 ausgelesener Informationen angesteuert. Die angesteuerten Vereinzelungs- und Zuführeinrichtungen 8 vereinzeln daraufhin getaktet, d.h. zum richtigen Zeitpunkt, lediglich die für das jeweils herzustellende, personalisierte Druckprodukt 1 erforderlichen, konventionell bedruckten Druckbogen 4 und legen diese auf der Sammelkette 27 des Sammelhefters 26 ab. Dazu werden jeweils nur die Vereinzelungs- und Zuführeinrichtungen 8 aktiviert, welche die entsprechend der ausgelesenen Markierung 15 für das aktuell zu fertigendende personalisierte Druckprodukt 1 benötigten, konventionell bedruckten Druckbogen 4 aufweist.

Zwischenzeitlich wird die bedruckte Bedruckstoffbahn 16 über verschiedene, an sich bekannte, nicht bezeichnete Umlenkrollen von der Rollendruckmaschine 14 in Richtung der nachgeordneten Schneideinrichtung 30 gefördert. Dabei wird die Bedruckstoffbahn 16 mittels der Wendestange 28 (Fig. 2) um 90° gedreht und stromauf der Schneideinrichtung 30 mittels der Rilliereinrichtung 29 in einer Längsrichtung 41 (Fig. 3) gerillt. In der Schneideinrichtung 30 wird die Bedruckstoffbahn 16 quer zu ihrer Längsrichtung 41 geschnitten, d.h. die individuellen Bogenteile 40 werden von der Bedruckstoffbahn 16 abgetrennt, wodurch die einzelnen, individuell bedruckten Druckbogen 3 entstehen. Diese individuell bedruckten Druckbogen 3 werden in der Umlenktrommel 31 in Richtung Sammelkette 27 umgelenkt, in der Falzeinrichtung 32 an der zuvor erzeugten Rillierung gefalzt und schliesslich mittels der Zuführeinrichtung 7 jeweils getaktet auf die zugehörigen und bereits vorgängig auf einem an sich bekannten, nicht dargestellten First der Sammelkette 27 zusammengetragenen, konventionell bedruckten Druckbogen 4 abgelegt. Natürlich kann das Rillieren auch erst in der Umlenktrommel 31 erfolgen. Die individuell bedruckten Druckbogen 3 können aber auch ohne vorheriges Rillieren der Bedruckstoffbahn 16 gefalzt werden.

Der weitere Transport der später jeweils ein personalisiertes Druckprodukt 1 bildenden, zu diesem Zeitpunkt jedoch noch lose aufeinanderliegenden Druckbogen 3, 4 auf der Sammelkette 27 erfolgt in einer der Längsrichtung 41 der zugeführten Bedruckstoffbahn 16 im Wesentlichen entgegengesetzten Transportrichtung 42. Während dieses Transports kann einer der Druckbogen 3, 4 bei Bedarf mittels der Adressiereinrichtung 10 (Fig. 2) und basierend auf den Informationen aus der jeweiligen Markierung 15 einen Adressenaufdruck erhalten. Die aufeinanderliegenden Druckbogen 3, 4 durchlaufen sodann die ebenfalls an sich bekannte Kontroll- und Ausrichteinheit 33, an deren stromabwärtigen Ende sie bei Bedarf zueinander ausgerichtet werden. In der daran anschliessenden Dickenkontrolleinrichtung 34 wird die Dicke der aufeinanderliegenden Druckbogen 3, 4 erfasst und damit kontrolliert, ob das nachgängig fertigzustellende personalisierte Druckprodukt 1 tatsächlich alle vorgesehenen Druckbogen 3, 4 enthält. Ein unvollständiges Druckprodukt 1 kann auf an sich bekannte Weise ohne weitere Bearbeitung ausgeschleust und ggf. mittels der Rollendruckmaschine 14 nachproduziert werden. Wurden die vorgängig geprüften Druckbogen 3, 4 dagegen korrekt zusammengetragen und ausgerichtet, werden diese in der Bindeeinrichtung 36 durch Heften mittels Drahtklammern 43 (Fig. 3, Fig. 4) zu jeweils einem personalisierten Druckprodukt 1 gebunden. Im nachfolgenden Dreischneider 38 werden die personalisierten Druckprodukte 1 an drei Seiten auf Format geschnitten und in der Stapelbildungsstation 11 zu Versand vorbereitet, d.h. gestapelt (Fig. 2). Der Maschinenführer kann die beschriebenen Verfahrensabläufe am Bedienpult 35 verfolgen und steuern.

Da die Zuführeinrichtung 7 für den zumindest einen individuell bedruckten Druckbogen 3 stromauf oder stromab zumindest einer der Vereinzelungs- und Zuführeinrichtungen 8 für konventionell bedruckte Druckbogen 4 in die Zusammentrageinrichtung 5 einmündend angeordnet werden kann, kann der zumindest eine individuell bedruckte Druckbogen 3 an einer beliebigen Position mit den selektiv zusammenzutragenden, konventionell bedruckten Druckbogen 4 zusammengeführt werden. Auf diese Weise kann vorteilhaft eine grosse Bandbreite bezüglich ihrer Zusammensetzung unterschiedlich kombinierter, personalisierter Druckprodukte 1 hergestellt werden.

Bei der in Fig. 2 dargestellten, sogenannten online-Lösung erfolgt die Herstellung der personalisierten Druckprodukte 1 unmittelbar im Nachgang zum Druck der individuellen Bogenteile 40 und deren jeweiliger Markierung 15 mittels der Rollendruckmaschine 14.

Alternativ dazu kann gemäss Fig. 3 in einer sogenannten offline-Lösung auch eine Rolle 16" mit einer bereits vorgängig entsprechend bedruckten Bedruckstoffbahn 16 bereitgestellt und in eine Abrolleinrichtung 44 eingebracht werden. Die bereits bedruckte Rolle 16" kann dazu zwischengelagert oder von der Druckerei zu einem separaten Anbieter von Weiterverarbeitungs-Dienstleistungen transportiert werden. Das Lesegerät 17 ist in diesem Fall unmittelbar stromab der Abrolleinrichtung 44 angeordnet. Beim Abrollen der Bedruckstoffbahn 16 können die Markierungen 15 ihrer individuellen Bogenteile 40 somit ebenfalls frühzeitig ausgelesen werden. Der sich daran anschliessende Verfahrensablauf bis zur Fertigstellung der personalisierten Druckprodukte 1 ist im Wesentlichen gleich, wie bereits zur Fig. 2 beschrieben.

In Fig. 4 ist eine Variante zur Fig. 3 dargestellt, bei welcher zwischen der Schneideinrichtung 30 und der Umlenktrommel 31 zusätzlich noch eine Sammeleinrichtung 45 für individuell bedruckten Druckbogen 3 angeordnet ist. Eine solche Sammeleinrichtung 45 könnte natürlich auch in die Umlenktrommel 31 integriert sein. Damit können vorteilhaft mehrere individuell bedruckten Druckbogen 3 nach dem Abtrennen von der Bedruckstoffbahn 16 gesammelt und schliesslich gemeinsam auf die zugehörigen und bereits vorgängig auf der Sammelkette 27 zusammengetragenen, konventionell bedruckten Druckbogen 4 abgelegt werden. Diese Anordnung erlaubt vorteilhaft weitere Optionen bei der Herstellung der personalisierten Druckprodukte 1.

Sowohl bei der offline-Lösung als auch bei der online-Lösung ist zwischen dem Lesegerät 17 für die Markierungen 15 der Bedruckstoffbahn 16 und der Zuführeinrichtung 7 für den zumindest einen individuell bedruckten Druckbogen 3 eine getaktete erste Transportstrecke T₁ und zwischen einer ersten, stromaufwärtigen Vereinzelungs- und Zuführeinrichtung 8 für konventionell bedruckte Druckbogen 4 und der Zuführeinrichtung 7 für den zumindest einen individuell bedruckten Druckbogen 3 eine getaktete zweite Transportstrecke T₂ ausgebildet (Fig. 3, Fig. 4). Dementsprechend wird der zumindest eine individuell bedruckte Druckbogen 3 auf der Transportstrecke T₁ getaktet von einer ersten Position P₁, in der seine Markierung 15 ausgelesen wird, zu einer zweiten Position P₂ transportiert, in der dieser zumindest eine individuell bedruckte Druckbogen 3 den selektiv zusammengetragenen, konventionell bedruckten Druckbogen 4 zugeführt wird. Zudem werden die konventionell bedruckten Druckbogen 4 auf der Transportstrecke T₂ ebenfalls getaktet transportiert. Dieser Transport erfolgt ausgehend von einer sich an einer ersten, stromaufwärtigen Vereinzelungs- und Zuführeinrichtung 8 für konventionell bedruckte Druckbogen 4 befindlichen dritten Position P₃ bis hin zur zweiten Position P₂, in welcher der zumindest eine individuell bedruckte Druckbogen 3 den selektiv zusammengetragenen, konventionell bedruckten Druckbogen 4 zugeführt wird. Dabei ist eine erste Anzahl von Arbeitstakten beim Transport des zumindest einen individuell bedruckten Druckbogens 3 auf der ersten Transportstrecke T₁ grösser als eine zweite Anzahl von Arbeitstakten beim Transport der selektiv zusammengetragenen, konventionell bedruckten Druckbogen 4 auf der zweiten Transportstrecke T₂. Aufgrund dessen steht nach dem Auslesen der jeweiligen Markierung 15 des zumindest einen individuell bedruckten Druckbogens 3 in jedem Fall ausreichend Zeit zum selektiven Vereinzeln der zum gleichen Druckprodukt 1 gehörenden, konventionell bedruckten Druckbogen 4 zur Verfügung, d.h. eine sich aufgrund der bereits oben beschriebenen Aktivierung jeweils unterschiedlicher Vereinzelungs- und Zuführeinrichtungen 8 ergebende geänderte Taktung der zweiten Transportstrecke T₂ kann aufgrund der grösseren Anzahl von Arbeitstakten in der ersten Transportstrecke T₁ problemlos ausgeglichen werden.

Durch die bereits beschriebene Anordnung von Umlenkrollen zwischen dem Lesegerät 17 und der Schneideinrichtung 30 kann in die ersten Transportstrecke T₁ eine Verlängerungsstrecke 46 eingebaut werden (Fig. 2). Auf diese Weise können verfahrensbedingt unterschiedliche Maschinentakte zwischen der ersten Transportstrecke T₁ und der zweiten Transportstrecke T₂ kompensiert werden.

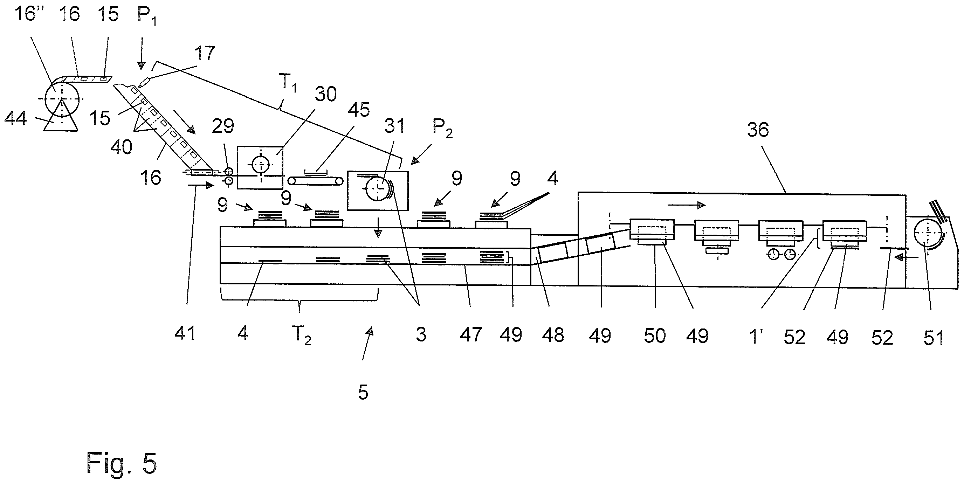

Fig. 5 zeigt ein zweites Ausführungsbeispiel, bei dem die Zusammentrageinrichtung 5 im Unterschied zum ersten Ausführungsbeispiel eine Fördereinrichtung 47 zum darauf nach- und aufeinander erfolgenden Ablegen von aus den Stapeln 9 vereinzelten, konventionell bedruckten Druckbogen 4 sowie von mittels der Umlenktrommel 31 zugeführten, individuell bedruckten Druckbogen 3 und zum Transport der aufliegenden Druckbogen 3, 4 aufweist. Natürlich kann statt einer Umlenktrommel 31 auch eine andere, geeignete Zuführeinheit Verwendung finden. Zudem ist die Bindeeinrichtung 36 als stromab der Zusammentrageinrichtung 5 angeordneter und mit letzterer über einen Zuförderer 48 verbundener Klebebinder ausgebildet. Im Klebebinder werden aus den aufeinanderliegenden Druckbogen 3, 4 gebildete und im Zuförderer 48 aufgestellte Buchblocks 49 in mehreren nicht näher bezeichneten Stationen auf an sich bekannte Weise an ihrem Rücken 50 bearbeitet und letztlich mit jeweils einem durch einen Umschlaganleger 51 bereitgestellten Umschlag 52 klebeweise zu personalisierten Druckprodukten 1' verbunden. Bis auf die Tatsache, dass die individuell bedruckten Druckbogen 3 liegend auf die vorgängig liegend zusammengetragenen konventionell bedruckte Druckbogen 4 abgelegt, diese Druckbogen 3, 4 statt zu einem Druckprodukt 1 geheftet, vielmehr zu einem Druckprodukt 1' miteinander verklebt werden, unterscheidet sich dieses zweite Ausführungsbeispiel nur unwesentlich vom ersten Ausführungsbeispiel.

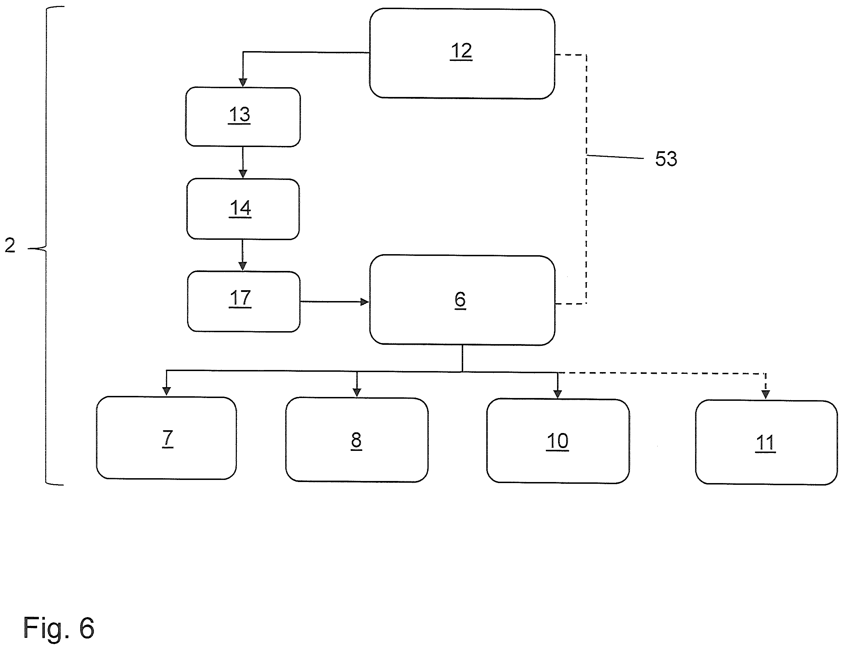

Zusätzlich zu der in Fig. 1 gezeigten Lösung ist in Fig. 6 zwischen der Datenbank 12 und der Steuereinrichtung 6 eine optionale Datenleitung 53 angeordnet. Bei Vorhandensein eines firmeninternen oder firmenübergreifenden Netzwerks können über eine solche permanente Datenleitung 53 vorteilhaft zwischenzeitliche Änderungen der Kundendaten eingebracht und der Verfahrensablauf unmittelbar entsprechend angepasst werden. Solche Änderungen können bei bestehenden Kunden beispielsweise zusätzliche Abonnemente oder Stornierungen solcher Abonnemente betreffen. Ohne eine solche Datenleitung 53 könnten solche Änderungen erst später für die Zustellung personalisierter Druckprodukte 1, 1' wirksam werden, d.h. nach Durchführung einer Aktualisierung der Datenbank 12. Zudem können die in der Steuereinrichtung 6 vorliegenden Daten über die Datenleitung 53 für ein Echtzeit-Reporting ausgelesen und einer Auswertungssoftware zur Verfügung gestellt werden.

## Patentansprüche

1. Verfahren zur Herstellung personalisierter Druckprodukte (1, 1'), bei dem jeweils zumindest ein individuell bedruckter Druckbogen (3) mit einer Anzahl konventionell bedruckten Druckbogen (4) zusammengetragen wird und die zusammengetragenen Druckbogen (3, 4) zu einem gemeinsamen Druckprodukt (1, 1') verbunden werden, wobei Informationen zur Herstellung der Druckprodukte (1, 1') aus einer Datenbank (12) an eine Steuereinrichtung (6) weitergegeben werden, wobei
• mehrere Stapel (9) konventionell bedruckter Druckbogen (4) bereitgestellt werden,
• eine Bedruckstoffbahn (16) mit mehreren individuellen Bogenteilen (40) sowie pro individuellem Bogenteil (40) mit jeweils einer auf den Informationen aus der Datenbank (12) beruhenden Markierung (15) zur Steuerung der Herstellung der personalisierten Druckprodukte (1, 1') bedruckt oder eine Rolle (16") einer derart bedruckten Bedruckstoffbahn (16) bereitgestellt wird,
• die Markierungen (15) der individuellen Bogenteile (40) ausgelesen und die daraus gewonnenen Informationen zum selektiven Zusammentragen jeweils zu einem gemeinsamen Druckprodukt (1, 1') gehörender, in den Stapeln (9) bereitgestellter, konventionell bedruckter Druckbogen (4) verwendet werden,
• nach dem Auslesen der Markierungen (15) der individuellen Bogenteile (40) von der Bedruckstoffbahn (16) individuell bedruckte Druckbogen (3) abgetrennt werden, und
• den zugehörigen, selektiv zusammenzutragenden, konventionell bedruckten Druckbogen (4) jeweils zumindest ein individuell bedruckter Druckbogen (3) entsprechend der aus seiner Markierung (15) ausgelesenen Informationen zugeführt wird.

2. Verfahren nach Anspruch 1, **dadurch gekennzeichnet, dass** das Auslesen der Markierung (15) unmittelbar nach dem Bedrucken oder dem Bereitstellen der Rolle (16") der bedruckten Bedruckstoffbahn (16) erfolgt.

3. Verfahren nach Anspruch 1 oder 2, **dadurch gekennzeichnet, dass** das Zuführen des jeweils zumindest einen individuell bedruckten Druckbogens (3) zu den selektiv zusammenzutragenden, konventionell bedruckten Druckbogen (4) stromauf oder stromab zumindest eines der konventionell bedruckten Druckbogen (4) erfolgt.

4. Verfahren nach einem der Ansprüche 1 bis 3, **dadurch gekennzeichnet, dass** ein individuell bedruckter Druckbogen (3) getaktet von einer ersten Position (P₁), in der seine Markierung (15) ausgelesen wird, zu einer zweiten Position (P₂) transportiert wird, in der dieser individuell bedruckte Druckbogen (3) den selektiv zusammengetragenen, konventionell bedruckten Druckbogen (4) zugeführt wird, dass ein Transport der konventionell bedruckten Druckbogen (4), ausgehend von einer sich an einer ersten, stromaufwärtigen Vereinzelungs- und Zuführeinrichtung (8) für konventionell bedruckten Druckbogen (4) befindlichen dritten Position (P₃) bis hin zur zweiten Position (P₂), in welcher der individuell bedruckte Druckbogen (3) den selektiv zusammengetragenen, konventionell bedruckten Druckbogen (4) zugeführt wird, ebenfalls getaktet erfolgt, wobei eine erste Anzahl von Arbeitstakten beim Transport des individuell bedruckten Druckbogens (3) grösser als eine zweite Anzahl von Arbeitstakten beim Transport der selektiv zusammengetragenen, konventionell bedruckten Druckbogen (4) ist.

5. Verfahren nach einem der Ansprüche 1 bis 4, **dadurch gekennzeichnet, dass** mehrere aufeinander folgende, individuell bedruckte Druckbogen (3) aufeinander gesammelt und den selektiv zusammengetragenen, konventionell bedruckten Druckbogen (4) gemeinsam zugeführt werden.

6. Verfahren nach einem der Ansprüche 1 bis 5, **dadurch gekennzeichnet, dass** die zu einem Druckprodukt (1) gehörenden Druckbogen (3, 4) zum Zusammentragen geöffnet, in geöffnetem Zustand nach- und übereinander abgelegt, dabei gemeinsam transportiert und anschliessend gemeinsam geheftet werden.

7. Verfahren nach einem der Ansprüche 1 bis 6, **dadurch gekennzeichnet, dass** die Bedruckstoffbahn (16) vor dem Abtrennen individuell bedruckter Druckbogen (3) oder die abgetrennten, individuell bedruckten Druckbogen (3) in einer Längsrichtung (41) gerillt wird/werden.

8. Verfahren nach Anspruch 6 oder 7, **dadurch gekennzeichnet, dass** die individuell bedruckte Druckbogen (3) vor dem Ablegen in einer Längsrichtung (41) gefalzt werden.

9. Verfahren nach einem der Ansprüche 1 bis 5, **dadurch gekennzeichnet, dass** die zu einem Druckprodukt (1') gehörenden Druckbogen (3, 4) zum Zusammentragen liegend nach- und übereinander abgelegt, dabei gemeinsam transportiert und anschliessend miteinander verklebt werden.

10. Verfahren nach einem der Ansprüche 1 bis 9, **dadurch gekennzeichnet, dass** die beim Auslesen der Markierungen (15) der individuellen Bogenteile (40) gewonnenen Informationen zusätzlich zum Adressieren und/oder Stapeln der personalisierten Druckprodukte (1, 1') verwendet werden.

11. Verfahren nach einem der Ansprüche 1 bis 10, **dadurch gekennzeichnet, dass** zwischen der Datenbank (12) und der Steuereinrichtung (6) ein direkter Datenaustausch erfolgt.

12. Verfahren nach einem der Ansprüche 1 bis 11, **dadurch gekennzeichnet, dass** das Bedrucken der Bedruckstoffbahn im Digitaldruckverfahren erfolgt.

13. Vorrichtung zur Herstellung personalisierter Druckprodukte (1, 1'), welche jeweils zumindest einen individuell bedruckten Druckbogen (3) und eine Anzahl konventionell bedruckte Druckbogen (4) aufweisen, mit einer Datenbank (12) in welcher Informationen zur Herstellung der personalisierten Druckprodukte (1, 1') gespeichert sind, mit einer Zusammentrageinrichtung (5) für die Druckbogen (3, 4), mit einer Zuführeinrichtung (7) zum Transport des zumindest einen individuell bedruckten Druckbogens (3) zur Zusammentrageinrichtung (5), mit mehreren Vereinzelungs- und Zuführeinrichtungen (8) zum Vereinzeln von Stapeln (9) konventionell bedruckter Druckbogen (4) und zum Zuführen von mehreren vereinzelten, konventionell bedruckten Druckbogen (4) zur Zusammentrageinrichtung (5), mit einer Bindeeinrichtung (36) für die aus den zusammengetragenen Druckbogen (3, 4) gebildeten Druckprodukte (1, 1') sowie mit einer Steuereinrichtung (6), wobei die Vorrichtung (2) eine Rollendruckmaschine (14) zum Bedrucken einer Bedruckstoffbahn (16) mit individuellen Bogenteilen (40) und mit einer auf den Informationen aus der Datenbank (12) beruhenden Markierung (15) zur Steuerung der Herstellung der personalisierten Druckprodukte (1, 1') oder eine Abrolleinrichtung (44) für eine solche Bedruckstoffbahn (16), ein Lesegerät (17) für die Markierungen (15) sowie eine Schneideinrichtung (30) zum Abtrennen individuell bedruckter Druckbogen (3) von der mit individuellen Bogenteilen (40) bedruckten Bedruckstoffbahn (16) aufweist, wobei die Schneideinrichtung (30) geeignet ist, die individuell bedruckten Druckbogen (3) erst nach dem Auslesen der Markierungen (15) der individuellen Bogenteile (40) von der Bedruckstoffbahn (16) abzutrennen, und wobei zumindest das Lesegerät (17), die Zuführeinrichtung (7) für den zumindest einen individuell bedruckten Druckbogen (3) und die Vereinzelungs- und Zuführeinrichtungen (8) für die konventionell bedruckte Druckbogen (4) mit der Steuereinrichtung (6) verbunden sind.

14. Vorrichtung nach Anspruch 13, **dadurch gekennzeichnet, dass** das Lesegerät (17) unmittelbar stromab der Rollendruckmaschine (14) oder der Abrolleinrichtung (44) angeordnet ist.

15. Vorrichtung nach einem der Ansprüche 13 oder 14, **dadurch gekennzeichnet, dass** die Zuführeinrichtung (7) für den zumindest einen individuell bedruckten Druckbogen (3) stromauf oder stromab zumindest einer der Vereinzelungs- und Zuführeinrichtungen (8) für konventionell bedruckte Druckbogen (4) in die Zusammentrageinrichtung (5) einmündend angeordnet ist.

16. Vorrichtung nach einem der Ansprüche 13 bis 15, **dadurch gekennzeichnet, dass** zwischen dem Lesegerät (17) für die Markierungen (15) der Bedruckstoffbahn (16) und der Zuführeinrichtung (7) für den zumindest einen individuell bedruckten Druckbogen (3) eine getaktete erste Transportstrecke (T₁) und zwischen einer ersten, stromaufwärtigen Vereinzelungs- und Zuführeinrichtung (8) für konventionell bedruckte Druckbogen (4) und der Zuführeinrichtung (7) für den zumindest einen individuell bedruckten Druckbogen (3) eine getaktete zweite Transportstrecke (T₂) ausgebildet ist, wobei eine erste Anzahl von Arbeitstakten der ersten Transportstrecke (T₁) grösser als eine zweite Anzahl von Arbeitstakten der zweiten Transportstrecke (T₂) ist.

17. Vorrichtung nach einem der Ansprüche 13 bis 16, **dadurch gekennzeichnet, dass** stromauf der Zuführeinrichtung (7) eine Sammeleinrichtung (45) für mehrere individuell bedruckte Druckbogen (3) angeordnet ist.

18. Vorrichtung nach einem der Ansprüche 13 bis 17, **dadurch gekennzeichnet, dass** die Zusammentrageinrichtung (5) als Teil eines Sammelhefters (26) ausgebildet ist und eine Sammelkette (27) zum darauf nach- und aufeinander erfolgenden Ablegen sowie zum Transport vorgängig geöffneter Druckbogen (3, 4) aufweist und, dass die Bindeeinrichtung (36) als stromab der Zusammentrageinrichtung (5) angeordnete Heftmaschine des Sammelhefters (26) ausgebildet ist.

19. Vorrichtung nach Anspruch 18, **dadurch gekennzeichnet, dass** stromauf oder stromab der Schneideinrichtung (30) eine Rilliereinrichtung (29) für die Bedruckstoffbahn (16) bzw. für von dieser abgetrennte, individuell bedruckte Druckbogen (3) angeordnet ist.

20. Vorrichtung nach einem der Ansprüche 13 bis 19, **dadurch gekennzeichnet, dass** die Zuführeinrichtung (7) für den zumindest einen individuell bedruckten Druckbogen (3) eine Falzeinrichtung (32) aufweist.

21. Vorrichtung nach einem der Ansprüche 13 bis 17, **dadurch gekennzeichnet, dass** die Zusammentrageinrichtung (5) eine Fördereinrichtung (47) zum darauf nach- und aufeinander erfolgenden Ablegen von Druckbogen (3, 4) und zum Transport der liegenden Druckbogen (3, 4) aufweist und die Bindeeinrichtung (36) als stromab der Zusammentrageinrichtung (5) angeordneter Klebebinder ausgebildet ist.

22. Vorrichtung nach einem der Ansprüche 13 bis 21, **dadurch gekennzeichnet, dass** die Vorrichtung (2) eine Adressiereinrichtung (10) zum Bedrucken der personalisierten Druckprodukte (1, 1') mit einer Zustelladresse und eine Stapelbildungsstation (11) zur Vorbereitung der personalisierten Druckprodukte (1, 1') für den Versand aufweist, wobei die Adressiereinrichtung (10) und/oder die Stapelbildungsstation (11) mit der Steuereinrichtung (6) der Vorrichtung (2) verbunden sind.

23. Vorrichtung nach einem der Ansprüche 13 bis 22, **dadurch gekennzeichnet, dass** zwischen der Datenbank (12) und der Steuereinrichtung (6) eine Datenleitung (53) angeordnet ist.

24. Vorrichtung nach einem der Ansprüche 13 bis 23, **dadurch gekennzeichnet, dass**, die Rollendruckmaschine (14) als Digitaldruckmaschine ausgebildet ist.

## Claims

1. Method for producing personalized printed products (1, 1'), in which respectively at least one individually printed sheet (3) is gathered together with a number of conventionally printed sheets (4) and the gathered printed sheets (3, 4) are joined to form a common printed product (1, 1'), wherein information relating to the production of the printed products (1, 1') is passed on from a database (12) to a control device (6), wherein
• a plurality of stacks (9) of conventionally printed sheets (4) are provided,
• a printing material web (16) having a plurality of individual sheet segments (40) and, for each individual sheet segment (40), printed with respectively one marking (15), based on the information from the database (12), for controlling the production of the personalized printed products (1, 1'), or a roll (16") of a printing material web (16) printed in this way is provided,
• the markings (15) of the individual sheet segments (40) are read and the information obtained therefrom is used for the selective gathering of conventionally printed sheets (4) each belonging to a common printed product (1, 1') and provided in the stacks (9),
• following the reading of the markings (15) of the individual sheet segments (40), individually printed sheets (3) are severed from the printing material web (16), and
• respectively at least one individually printed sheet (3) is supplied to the associated, selectively gathered, conventionally printed sheets (4) in accordance with the information read from its marking (15).

2. Method according to Claim 1, **characterized in that** the reading of the marking (15) is carried out immediately after the printing or the provision of the roll (16") of the printed printing material web (16).

3. Method according to Claim 1 or 2, **characterized in that** the feeding of the respective at least one individually printed sheet (3) to the selectively gathered conventionally printed sheets (4) is carried out upstream or downstream of at least one of the conventionally printed sheets (4).

4. Method according to one of Claims 1 to 3, **characterized in that** an individually printed sheet (3) is transported in a clocked manner from a first position (P₁), in which its marking (15) is read, to a second position (P₂), in which this individually printed sheet (3) is fed to the selectively gathered conventionally printed sheets (4) **in that** a transport of the conventionally printed sheets (4), starting from a third position (P₃) located on a first, upstream separating and feeding device (8) for conventionally printed sheets (4), as far as to the second position (P₂), in which the individually printed sheets (3) are fed to the selectively gathered conventionally printed sheets (4), is likewise carried out in a clocked manner, wherein a first number of operating cycles during the transport of the individually printed sheet (3) is greater than a second number of operating cycles during the transport of the selectively gathered conventionally printed sheets (4).

5. Method according to one of Claims 1 to 4, **characterized in that** a plurality of individually printed sheets (3) following one another are collected on one another and fed jointly to the selectively gathered conventionally printed sheets (4) .

6. Method according to one of Claims 1 to 5, **characterized in that** printed sheets (3, 4) belonging to a printed product (1) are opened to be gathered, are deposited successively on top of one another in the opened state, transported jointly and then stitched jointly.

7. Method according to one of Claims 1 to 6, **characterized in that** the printing material web (16) before the separation of individually printed sheets (3) or the severed individually printed sheets (3) is/are grooved in a longitudinal direction (41).

8. Method according to Claim 6 or 7, **characterized in that** the individually printed sheets (3) are folded in a longitudinal direction (41) before being deposited.

9. Method according to one of Claims 1 to 5, **characterized in that** the printed sheets (3, 4) belonging to a printed product (1') are deposited flat successively over one another for the gathering, transported jointly and then glued to one another.

10. Method according to one of Claims 1 to 9, **characterized in that** the information obtained when reading the markings (15) of the individual sheet segments (40) is additionally used for addressing and/or stacking the personalized printed products (1, 1').

11. Method according to one of Claims 1 to 10, **characterized in that** direct data exchange takes place between the database (12) and the control device (6).

12. Method according to one of Claims 1 to 11, **characterized in that** the printing material web is printed in the digital printing process.

13. Apparatus for producing personalized printed products (1, 1'), which respectively comprise at least one individually printed sheet (3) and a number of conventionally printed sheets (4), having a database (12) in which information relating to the production of the personalized printed products (1, 1') is stored, having a gathering device (5) for the printed sheets (3, 4), having a feeding device (7) for transporting the at least one individually printed sheet (3) to the gathering device (5), having a plurality of separating and feeding devices (8) for separating stacks (9) of conventionally printed sheets (4) and for feeding a plurality of separated conventionally printed sheets (4) to the gathering device (5), having a binding device (36) for the printed products (1, 1') formed from the gathered printed sheets (3, 4), and having a control device (6), wherein
the apparatus (2) has a web-fed printing press (14) for printing a printing material web (16) with individual sheet segments (40) and with a marking (15), based on the information from the database (12), for controlling the production of the personalized printed products (1, 1'), or an unwind device (44) for such a printing material web (16), a reader (17) for the markings (15) and a cutting device (30) for severing individually printed sheets (3) from the printing material web (16) printed with individual sheet segments (40), wherein the cutting device (30) is suitable for severing the individually printed sheets (3) from the printing material web (16) only after the markings (15) of the individual sheet segments (40) have been read, and wherein at least the reader (17), the feeding device (7) for the at least one individually printed sheet (3) and the separating and feeding devices (8) for the conventionally printed sheets (4) are connected to the control device (6).

14. Apparatus according to Claim 13, **characterized in that** the reader (17) is arranged immediately downstream of the web-fed printing press (14) or the unwind device (44).

15. Apparatus according to either of Claims 13 and 14, **characterized in that** the feeding device (7) for the at least one individually printed sheet (3) is arranged to open into the gathering device (5) upstream or downstream of at least one of the separating and feeding devices (8) for conventionally printed sheets (4).

16. Apparatus according to one of Claims 13 to 15, **characterized in that** a clocked first transport section (T₁) is formed between the reader (17) for the markings (15) of the printing material web (16) and the feeding device (7) for the at least one individually printed sheet (3), and a clocked second transport section (T₂) is arranged between a first, upstream separating and feeding device (8) for conventionally printed sheets (4) and the feeding device (7) for the at least one individually printed sheet (3), wherein a first number of operating cycles of the first transport section (T₁) is greater than a second number of operating cycles of the second transport section (T₂) .

17. Apparatus according to one of Claims 13 to 16, **characterized in that** a collecting device (45) for a plurality of individually printed sheets (3) is arranged upstream of the feeding device (7).

18. Apparatus according to one of Claims 13 to 17, **characterized in that** the gathering device (5) is formed as part of a gatherer-stitcher (26) and has a gathering chain (27) for depositing and transporting previously opened printed sheets (3, 4) thereon successively and on top of one another, and **in that** the binding device (36) is formed as a stitching machine of the gatherer-stitcher (26) arranged downstream of the gathering device (5).

19. Apparatus according to Claim 18, **characterized in that** a grooving device (29) for the printing material web (16) or for individually printed sheets (3) severed from the latter is arranged upstream or downstream of the cutting device (30).

20. Apparatus according to one of Claims 13 to 19, **characterized in that** the feeding device (7) for the at least one individually printed sheet (3) has a folding device (32).

21. Apparatus according to one of Claims 13 to 17, **characterized in that** the gathering device (5) has a conveying device (47) for depositing printed sheets (3, 4) thereon successively and on top of one another and for transporting the reclined printed sheets (3, 4), and the binding device (36) is formed as an adhesive binder arranged downstream of the gathering device (5).

22. Apparatus according to one of Claims 13 to 21, **characterized in that** the apparatus (2) has an addressing device (10) for printing the personalized printed products (1, 1') with a delivery address and a stack-forming station (11) for preparing the personalized printed products (1, 1') for dispatch, wherein the addressing device (10) and/or the stack-forming station (11) are connected to the control device (6) of the apparatus (2).

23. Apparatus according to one of Claims 13 to 22, **characterized in that** a data line (53) is arranged between the database (12) and the control device (6) .

24. Apparatus according to one of Claims 13 to 23, **characterized in that** the web-fed printing press (14) is formed as a digital printing press.

## Revendications

1. Procédé de fabrication de produits imprimés personnalisés (1, 1'), selon lequel au moins une feuille individuellement imprimée (3) est respectivement regroupée avec un certain nombre de feuilles conventionnellement imprimées (4) et les feuilles imprimées regroupées (3, 4) sont reliées en un produit imprimé commun (1, 1'), sachant que des informations pour la fabrication des produits imprimés (1, 1') sont transmises à partir d'une base de données (12) à une unité de commande (6),
sachant que
- on met à disposition plusieurs piles (9) de feuilles conventionnellement imprimées (4),
- on imprime sur une bande de matériau à imprimer (16) plusieurs parties formant feuilles individuelles (40) ainsi que, pour chaque partie formant feuille individuelle (40), un marquage respectif (15) fondé sur les informations provenant de la base de données (12) et destiné à commander la fabrication des produits imprimés personnalisés (1, 1'), ou on met à disposition une bobine (16") de bande de matériau à imprimer (16) ainsi imprimée,
- les marquages (15) des parties formant feuilles individuelles (40) sont lus et les informations ainsi obtenues sont utilisées pour le regroupement sélectif de feuilles conventionnellement imprimées (4), mises à disposition dans les piles (9), qui font respectivement partie d'un produit imprimé commun (1, 1'),
- à la suite de la lecture des marquages (15) des parties formant feuilles individuelles (40), des feuilles individuellement imprimées (3) sont détachées de la bande de matériau à imprimer (16), et
- en fonction des informations lues à partir de son marquage (15), au moins une feuille individuellement imprimée (3) est respectivement apportée aux feuilles conventionnellement imprimées (4) associées, à regrouper sélectivement.

2. Procédé selon la revendication 1, **caractérisé en ce que** la lecture du marquage (15) s'effectue directement après l'impression ou la mise à disposition de la bobine (16") de bande de matériau imprimée (16).

3. Procédé selon la revendication 1 ou 2, **caractérisé en ce que** l'apport de la feuille individuellement imprimée respective au moins unique (3) aux feuilles conventionnellement imprimées (4) à regrouper sélectivement s'effectue en amont ou en aval d'au moins une des feuilles conventionnellement imprimées (4).

4. Procédé selon l'une des revendications 1 à 3, **caractérisé en ce qu'**une feuille individuellement imprimée (3) est transportée de manière cyclique d'une première position (P₁), dans laquelle son marquage (15) est lu, vers une deuxième position (P₂), dans laquelle cette feuille individuellement imprimée (3) est apportée aux feuilles conventionnellement imprimées (4) sélectivement regroupées, **en ce qu'**un transport des feuilles conventionnellement imprimées (4), en partant d'une troisième position (P₃) - se trouvant au niveau d'une première unité (8) de déliassage et d'alimentation, située en amont, pour les feuilles conventionnellement imprimées (4) - jusqu'à la deuxième position (P₂) dans laquelle la feuille individuellement imprimée (3) est apportée aux feuilles conventionnellement imprimées (4) sélectivement regroupées, s'effectue également de manière cyclique, sachant qu'un premier nombre de cycles de travail lors du transport de la feuille individuellement imprimée (3) est supérieur à un deuxième nombre de cycles de travail lors du transport des feuilles conventionnellement imprimées (4) sélectivement regroupées.

5. Procédé selon l'une des revendications 1 à 4, **caractérisé en ce que** plusieurs feuilles individuellement imprimées successives (3) sont rassemblées les unes sur les autres et apportées conjointement aux feuilles conventionnellement imprimées (4) sélectivement regroupées.

6. Procédé selon l'une des revendications 1 à 5, **caractérisé en ce que** les feuilles imprimées (3, 4) faisant partie d'un produit imprimé (1) sont, pour le regroupement, ouvertes, déposées successivement les unes sur les autres dans l'état ouvert, puis conjointement transportées et enfin piquées ensemble.

7. Procédé selon l'une des revendications 1 à 6, **caractérisé en ce que** la bande de matériau à imprimer (16), avant le détachement des feuilles individuellement imprimées (3), ou les feuilles individuellement imprimées (3) détachées, est/sont rainurée(s) dans une direction longitudinale (41).

8. Procédé selon la revendication 6 ou 7, **caractérisé en ce que** les feuilles individuellement imprimées (3) sont pliées dans une direction longitudinale (41) avant la dépose.

9. Procédé selon l'une des revendications 1 à 5, **caractérisé en ce que** les feuilles imprimées (3, 4) faisant partie d'un produit imprimé (1') sont, pour le regroupement, déposées successivement et en superposition en position horizontale, puis conjointement transportées et enfin assemblées entre elles par collage.

10. Procédé selon l'une des revendications 1 à 9, **caractérisé en ce que** les informations obtenues lors de la lecture des marquages (15) des parties formant feuilles individuelles (40) sont en outre utilisées pour l'adressage et/ou l'empilement des produits imprimés personnalisés (1, 1').

11. Procédé selon l'une des revendications 1 à 10, **caractérisé en ce qu'**un échange direct de données a lieu entre la base de données (12) et l'unité de commande (6).

12. Procédé selon l'une des revendications 1 à 11, **caractérisé en ce que** l'impression de la bande de matériau à imprimer s'effectue par impression numérique.

13. Dispositif de fabrication de produits imprimés personnalisés (1, 1') qui présentent respectivement au moins une feuille individuellement imprimée (3) et un certain nombre de feuilles conventionnellement imprimées (4), avec une base de données (12) dans laquelle sont mémorisées des informations pour la fabrication des produits imprimés personnalisés (1, 1'), avec une unité de regroupement (5) pour les feuilles imprimées (3, 4), avec une unité d'alimentation (7) pour le transport de la feuille individuellement imprimée au moins unique (3) vers l'unité de regroupement (5), avec plusieurs unités (8) de déliassage et d'alimentation pour déliasser des piles (9) de feuilles conventionnellement imprimées (4) et pour apporter plusieurs feuilles conventionnellement imprimées déliassées (4) à l'unité de regroupement (5), avec une unité de reliure (36) pour les produits imprimés (1, 1') formés à partir des feuilles imprimées regroupées (3, 4), et avec une unité de commande (6),
sachant que le dispositif (2) présente une presse rotative (14) pour imprimer sur une bande de matériau à imprimer (16) avec des parties formant feuilles individuelles (40) et avec un marquage (15) fondé sur les informations provenant de la base de données (12) et destiné à commander la fabrication des produits imprimés personnalisés (1, 1'), ou une unité de dévidage (44) pour une telle bande de matériau à imprimer (16), un appareil de lecture (17) pour les marquages (15) ainsi qu'une unité de coupe (30) pour détacher des feuilles individuellement imprimées (3) de la bande de matériau à imprimer (16) sur laquelle sont imprimées des parties formant feuilles individuelles (40), sachant que l'unité de coupe (30) est apte à ne détacher les feuilles individuellement imprimées (3) de la bande de matériau à imprimer (16) qu'après la lecture des marquages (15) des parties formant feuilles individuelles (40), et sachant qu'au moins l'appareil de lecture (17), l'unité d'alimentation (7) pour la feuille individuellement imprimée au moins unique (3) et les unités (8) de déliassage et d'alimentation pour les feuilles conventionnellement imprimées (4) sont reliées à l'unité de commande (6).

14. Dispositif selon la revendication 13, **caractérisé en ce que** l'appareil de lecture (17) est disposé immédiatement en aval de la presse rotative (14) ou de l'unité de dévidage (44).

15. Dispositif selon l'une des revendications 13 ou 14, **caractérisé en ce que** l'unité d'alimentation (7) pour la feuille individuellement imprimée au moins unique (3) est disposée en amont ou en aval d'au moins une des unités (8) de déliassage et d'alimentation pour des feuilles conventionnellement imprimées (4), en débouchant dans l'unité de regroupement (5).

16. Dispositif selon l'une des revendications 13 à 15, **caractérisé en ce qu'**un premier parcours de transport cyclique (T₁) est formé entre l'appareil de lecture (17) pour les marquages (15) de la bande de matériau à imprimer (16) et l'unité d'alimentation (7) pour la feuille individuellement imprimée au moins unique (3), et un deuxième parcours de transport cyclique (T₂) est formé entre une première unité (8) de déliassage et d'alimentation pour les feuilles conventionnellement imprimées (4), située en amont, et l'unité d'alimentation (7) pour la feuille individuellement imprimée au moins unique (3), sachant qu'un premier nombre de cycles de travail du premier parcours de transport (T₁) est supérieur à un deuxième nombre de cycles de travail du deuxième parcours de transport (T₂).

17. Dispositif selon l'une des revendications 13 à 16, **caractérisé en ce qu'**une unité de rassemblement (45) pour plusieurs feuilles individuellement imprimées (3) est disposée en amont de l'unité d'alimentation (7).

18. Dispositif selon l'une des revendications 13 à 17, **caractérisé en ce que** l'unité de regroupement (5) est réalisée sous la forme d'un élément d'une encarteuse-piqueuse (26) et présente une chaîne de rassemblement (27) pour la dépose des feuilles imprimées préalablement ouvertes (3, 4) qui s'effectue successivement et en superposition sur celle-ci, ainsi que pour le transport de celles-ci, et **en ce que** l'unité de reliure (36) est réalisée sous la forme d'une piqueuse, disposée en aval de l'unité de regroupement (5), de l'encarteuse-piqueuse (26).

19. Dispositif selon la revendication 18, **caractérisé en ce qu'**une unité de rainurage (29) pour la bande de matériau à imprimer (16), ou respectivement pour les feuilles individuellement imprimées (3) détachées de celle-ci, est disposée en amont ou en aval de l'unité de coupe (30).

20. Dispositif selon l'une des revendications 13 à 19, **caractérisé en ce que** l'unité d'alimentation (7) pour la feuille individuellement imprimée au moins unique (3) présente une unité de pliage (32).

21. Dispositif selon l'une des revendications 13 à 17, **caractérisé en ce que** l'unité de regroupement (5) présente une unité de transport (47) pour y déposer les feuilles imprimées (3, 4) successivement et en superposition et pour y transporter les feuilles imprimées (3, 4) en position horizontale, et l'unité de reliure (36) est réalisée sous la forme d'une unité de reliure par collage disposée en aval de l'unité de regroupement (5).

22. Dispositif selon l'une des revendications 13 à 21, **caractérisé en ce que** le dispositif (2) présente une unité d'adressage (10) pour imprimer sur les produits imprimés personnalisés (1, 1') une adresse de livraison, et un poste (11) de formation de piles pour préparer les produits imprimés personnalisés (1, 1') pour l'expédition, sachant que l'unité d'adressage (10) et/ou le poste (11) de formation de piles sont reliés à l'unité de commande (6) du dispositif (2).

23. Dispositif selon l'une des revendications 13 à 22, **caractérisé en ce qu'**une ligne de données (53) est disposée entre la base de données (12) et l'unité de commande (6).

24. Dispositif selon l'une des revendications 13 à 23, **caractérisé en ce que** la presse rotative (14) est réalisée sous la forme d'une imprimante numérique.
